# EUROPÄISCHE PATENTSCHRIFT

(11) **EP 2 095 008 B1**
(45) Veröffentlichungstag und Bekanntmachung des Hinweises auf die Patenterteilung: **09.12.2015**
(21) Anmeldenummer: 07819376.0
(22) Anmeldetag: 27.10.2007
(51) Int. Cl.: F16P 3/14

(54) **VERFAHREN UND VORRICHTUNG ZUM ÜBERWACHEN EINES DREIDIMENSIONALEN RAUMBEREICHS**
METHOD AND APPARATUS FOR MONITORING A THREE-DIMENSIONAL SPATIAL AREA
PROCÉDÉ ET DISPOSITIF DE SURVEILLANCE D'UN ESPACE À TROIS DIMENSIONS

(30) Priorität: 24.11.2006 DE 102006057605
(43) Veröffentlichungstag der Anmeldung: 02.09.2009
(73) Patentinhaber: Pilz GmbH & Co. KG, 73760 Ostfildern (DE)
(72) Erfinder: HAUSSMANN, Joerg, 73760 Ostfildern (DE); HADER, Soeren, 73732 Esslingen (DE)
(74) Vertreter: Witte, Weller & Partner Patentanwälte mbB
(86) Internationale Anmeldenummer: PCT/EP2007/009333
(87) Internationale Veröffentlichungsnummer: WO 2008/061607

(56) Entgegenhaltungen:
- EP-A- 1 586 805
- WO-A-02/073086
- WO-A-2005/101812
- US-A1- 2005 207 618

## Beschreibung

Die vorliegende Erfindung betrifft ein Verfahren zum Überwachen eines dreidimensionalen Raumbereichs, mit den Schritten:
- Bereitstellen von zumindest einer ersten und einer zweiten Bildaufnahmeeinheit, die mit einem gemeinsamen Sichtbereich auf den Raumbereich ausgerichtet sind,
- Definieren von zumindest einem virtuellen Schutzbereich innerhalb des gemeinsamen Sichtbereichs, wobei der virtuelle Schutzbereich mit Hilfe der Bildaufnahmeeinheiten überwacht wird, so dass das Eindringen eines Fremdobjekts in den virtuellen Schutzbereich ein Alarmsignal auslöst,
- Aufnehmen eines ersten Abbildes von dem Raumbereich mit Hilfe der ersten Bildaufnahmeeinheit und Aufnehmen eines zweiten Abbildes von dem Raumbereich mit Hilfe der zweiten Bildaufnahmeeinheit,
- Vergleichen des ersten und zweiten Abbildes, um zueinander disjunkte Bildbereiche in dem ersten und zweiten Abbild zu identifizieren, wobei ein disjunkter Bildbereich in einem der zwei Abbilder ein Objekt zeigt, das im jeweils anderen Abbild nicht vorhanden oder zumindest nicht erkennbar ist, und
- Erzeugen des Alarmsignals in Abhängigkeit von den disjunkten Bildbereichen und dem virtuellen Schutzbereich.

Die Erfindung betrifft ferner eine Vorrichtung zum Überwachen eines dreidimensionalen Raumbereichs, mit zumindest einer ersten und einer zweiten Bildaufnahmeeinheit, die mit einem gemeinsamen Sichtbereich auf den Raumbereich ausgerichtet sind, wobei die erste Bildaufnahmeeinheit dazu ausgebildet ist, ein erstes Abbild von dem Raumbereich aufzunehmen, und wobei die zweite Bildaufnahmeeinheit dazu ausgebildet ist, ein zweites Abbild von dem Raumbereich aufzunehmen, und mit einer Auswerteeinheit mit einem Speicherbereich zum Abspeichern eines Datensatzes, der zumindest einen virtuellen Schutzbereich innerhalb des gemeinsamen Sichtbereichs definiert, wobei die Auswerteeinheit dazu ausgebildet ist, ein Alarmsignal in Abhängigkeit von zumindest einem der Abbilder auszulösen, wenn ein Fremdobjekt in den virtuellen Schutzbereich eindringt, und wobei die Auswerteeinheit ferner dazu ausgebildet ist, das erste und zweite Abbild zu vergleichen, um zueinander disjunkte Bildbereiche in dem ersten und zweiten Abbild zu identifizieren, wobei ein disjunkter Bildbereich in einem der zwei Abbilder ein Objekt zeigt, das im jeweils anderen Abbild nicht vorhanden oder zumindest nicht erkennbar ist.

Ein solches Verfahren und eine solche Vorrichtung sind aus DE 100 49 366 A1 bekannt.

Die vorliegende Erfindung betrifft insbesondere ein Verfahren und eine Vorrichtung zum Absichern einer automatisiert arbeitenden Anlage, von der eine Gefahr für Personen oder andere Gegenstände ausgeht. Beispielsweise kann es sich bei der automatisiert arbeitenden Anlage um einen Roboter handeln, dessen Bewegungen eine Gefahr für Personen oder Gegenstände darstellen, die sich im Arbeitsbereich des Roboters aufhalten. Klassicherweise werden solche automatisiert arbeitenden Anlagen mit Hilfe von mechanischen Absperrungen, wie etwa Schutzzäunen, Schutztüren und dergleichen, und mit Hilfe von Lichtschranken und/oder Laserscannem abgesichert. Der Arbeitsbereich der Anlage wird abgesperrt, so dass das Eindringen einer Person oder eines anderen Fremdobjekts verhindert wird oder zumindest detektiert wird. Im letztgenannten Fall führt die Detektion zu einer Abschaltung der Anlage und/oder zu einer anderen Sicherheitsreaktion.

Lichtschranken, Laserscanner und Schutzzäune können eine automatisiert arbeitende Anlage allerdings nur relativ weiträumig und mit starren, weitgehend geradlinigen Begrenzungsflächen absperren. Eine solche Absperrung benötigt daher relativ viel Platz und sie ist außerdem unflexibel und aufwändig zu installieren. Darüber hinaus können solche Absperrungen die Bedienbarkeit der Anlage erheblich beeinträchtigen, was häufig zu Manipulationen und daraus folgenden Unfallrisiken führt.

Es gibt daher seit einiger Zeit Bestrebungen, gefährliche Arbeitsbereiche von automatisiert arbeitenden Anlagen mit Hilfe von kamerabasierten Überwachungsvorrichtungen abzusichern. WO 2004/029502 A1 offenbart eine solche Vorrichtung. Die bekannte Vorrichtung weist drei Bildaufnahmeeinheiten auf, von denen jeweils zwei Bildaufnahmeeinheiten ein Paar bilden. Die aufgenommenen Bildpaare werden mit Hilfe von zwei algorithmisch unterschiedlichen Verfahren ausgewertet, um dreidimensionale Bilddaten von dem überwachten Raumbereich zu erhalten. Mit Hilfe dieser Bilddaten lassen sich virtuelle Schutzbereiche um die überwachte Anlage herum überwachen. Die bekannte Vorrichtung ist allerdings noch nicht optimal, weil sie eine relativ große Mindestentfernung zwischen den Bildaufnahmeeinheiten und dem überwachten Raumbereich voraussetzt.

Die eingangs genannte DE 100 49 366 A1 beschreibt ein Verfahren und eine Vorrichtung zum Überwachen eines Raumbereichs mit Hilfe von zumindest einer ersten und einer zweiten Bildaufnahmeeinheit, deren Sichtbereiche zumindest teilweise überlappend ausgerichtet sind. Innerhalb des gemeinsamen Sichtbereichs wird ein virtueller Schutzbereich überwacht. Die Verwendung von zumindest zwei Bildaufnahmeeinheiten dient hier dazu, Störfaktoren im Nahbereich, wie etwa ein Insekt, das über das Objektiv einer der Bildaufnahmeeinheiten läuft, zu erkennen, um in Abhängigkeit davon die Auslösung eines Fehlalarms zu vermeiden. Dementsprechend ist bei der Vorrichtung aus DE 100 49 366 A1 vorgesehen, dass ein Alarmsignal nur dann erzeugt wird, wenn ein Fremdobjekt gleichzeitig von beiden Bildaufnahmeeinheiten erfasst und als alarmrelevant eingestuft wird. Zusätzlich kann eine dreidimensionale Auswertung der aufgenommenen Bilder vorgesehen sein, um Störeinflüsse bei der Detektion von alarmrelevanten Objekten weiter zu reduzieren, indem bspw. nur Objekte in einem festgelegten Entfemungsbereich detektiert werden. Das bekannte Verfahren und die bekannte Vorrichtung sind in der beschriebenen Form allerdings nicht geeignet, um den Arbeitsbereich einer automatisiert arbeitenden Anlage mit der dafür erforderlichen Fehlersicherheit abzusichern.

US 2005/0207618 A1 und WO 2004/029502 A1 offenbaren ein Verfahren und eine Vorrichtung zum Überwachen eines gefährlichen Arbeitsbereichs, wobei Bilder von zwei Bildaufnahmeeinheiten einer dreidimensionalen Szenenanalyse unterzogen werden. Es kommen dabei verschiedene dreidimensionale Szenenanalyseverfahren zur Anwendung. Vorgeschlagen wird insbesondere, eine konturbasierte und eine korrelationsbasierte Bildauswertung durchzuführen.

Weitere Verfahren und Vorrichtungen zur Überwachung von Raumbereichen mit Hilfe von Bildaufnahmeeinheiten sind aus WO 02/073086 A1, EP 1 586 805 A1 oder WO 2005/101812 A1 bekannt.

Vor diesem Hintergrund ist es eine Aufgabe der vorliegenden Erfindung, ein Verfahren und eine Vorrichtung zum Überwachen eines Raumbereichs anzugeben, die eine erhöhte Sicherheit bieten, so dass eine automatische Absicherung eines gefährlichen Bereichs, wie etwa des Arbeitsbereichs einer automatisiert arbeitenden Anlage, ermöglicht wird. Es ist insbesondere eine Aufgabe, ein solches Verfahren und eine solche Vorrichtung anzugeben, bei denen die Sicherheitsfunktion durch Fremdobjekte im Nahbereich nicht gefährdet wird.

Gemäß einem Aspekt der Erfindung wird diese Aufgabe durch ein Verfahren der eingangs genannten Art gelöst, bei dem das Alarmsignal erzeugt wird, wenn das Objekt im disjunkten Bildbereich den virtuellen Schutzbereich verdeckt. Nach einem weiteren Aspekt der Erfindung wird diese Aufgabe durch eine Vorrichtung der eingangs genannten Art gelöst, bei der die Auswerteeinheit außerdem dazu ausgebildet ist, das Alarmsignal zu erzeugen, wenn das Objekt im disjunkten Bildbereich den virtuellen Schutzbereich verdeckt.

Disjunkte Bildbereiche sind Bereiche in dem ersten und zweiten Abbild, die trotz des gemeinsamen (überlappenden) Sichtbereichs auf den Raumbereich keine hinreichenden Korrelationen aufweisen. Hinreichende Korrelationen ergeben sich jeweils dann, wenn die zumindest zwei Bildaufnahmeeinheiten aufgrund ihres gemeinsamen Sichtbereichs gleiche Objekte aufnehmen und erkennen können. Die Lage und Form dieser Objekte kann in den zumindest zwei Abbildern variieren, da die Sichtbereiche zwar überlappend, jedoch nicht identisch sind. Es ergeben sich daher leicht unterschiedliche Blickwinkel. Trotzdem kann mit Hilfe von Bildauswerteverfahren, wie sie bspw. in der eingangs genannten WO 2004/029502 A1 und den dort angegebenen Veröffentlichungen beschrieben sind, eine Korrelation zwischen den entsprechenden Bildbereichen in den zumindest zwei Abbildern gefunden werden. Mit anderen Worten lassen sich gleiche Objekte in den zumindest zwei Abbildern trotz der leicht unterschiedlichen Blickwinkel identifizieren und einander zuordnen. Enthält jedoch ein Abbild einen oder mehrere Bildbereiche, für die sich keine Korrelation im jeweils anderen Abbild finden lässt, ist davon auszugehen, dass der entsprechende Bildbereich ein Objekt zeigt, das im jeweils anderen Abbild nicht vorhanden oder zumindest nicht erkennbar ist. Ein solcher Bildbereich wird im Rahmen der vorliegenden Erfindung als disjunkter Bildbereich bezeichnet.

Bei dem neuen Verfahren und der neuen Vorrichtung löst ein disjunkter Bildbereich in einem der Abbilder nicht per se ein Alarmsignal aus. Es wird zusätzlich geprüft, ob der disjunkte Bildbereich den virtuellen Schutzbereich verdeckt, der innerhalb des gemeinsamen Sichtbereichs der beiden Bildaufnahmeeinheiten liegt und der mit Hilfe des neuen Verfahrens und der neuen Vorrichtung überwacht wird. Ein disjunkter Bildbereich in einem oder beiden Abbildern löst also kein Alarmsignal aus, wenn er den Blick der entsprechenden Bildaufnahmeeinheit auf den definierten Schutzbereich nicht beeinträchtigt. Umgekehrt wird jedoch das Alarmsignal sofort erzeugt, wenn der disjunkte Bildbereich den virtuellen Schutzbereich verdeckt. Vorzugsweise wird das Alarmsignal auch erzeugt, wenn ein disjunkter Bildbereich den virtuellen Schutzbereich bereits teilweise verdeckt, wobei bevorzugte Ausführungsbeispiele der Erfindung Bildarbeitungsschritte beinhalten, die dazu führen, dass ein disjunkter Bildbereich nur dann ein Alarmsignal auslöst, wenn er eine definierte Anzahl an Bildpunkten (Pixel) in den Abbildern überdeckt, so dass nicht bereits eine Überdeckung in nur einem Pixel zum Erzeugen des Alarmsignals führt.

Das neue Verfahren und die neue Vorrichtung bieten eine erhöhte Sicherheit, weil gewährleistet ist, dass der virtuelle Schutzbereich "lückenlos" überwacht wird, selbst wenn bspw. ein Schmutzteilchen, ein Insekt oder ein anderes Fremdobjekt den Sichtbereich einer Bildaufnahmeeinheit im Nahbereich beeinträchtigt. Das neue Verfahren und die neue Vorrichtung bieten jedoch nicht nur eine Nahbereichsüberwachung, sondern sie gewährleisten auch, dass jede Bildaufnahmeeinheit eine freie Sicht auf den Schutzbereich erhält. Insbesondere wird erkannt, ob ein Fremdobjekt die Sicht auf den virtuellen Schutzbereich soweit beeinträchtigt, dass in seinem "Schatten" ein anderes Fremdobjekt in den Schutzbereich eindringen könnte.

Sobald die freie Sicht auf den virtuellen Schutzbereich von einer der Bildaufnahmeeinheiten eingeschränkt ist, wird das Alarmsignal erzeugt, mit dessen Hilfe dann eine überwachte Anlage bspw. abgeschaltet oder anderweitig in einen gefahrlosen Zustand versetzt werden kann. Andererseits werden unnötige Fehlabschaltungen vermieden, weil nicht jeder disjunkte Bildbereich und damit nicht jedes Fremdobjekt, das nur von einer Bildaufnahmeeinheit aufgenommen wird, zu einer Sicherheitsabschaltung führt.

Das neue Verfahren und die neue Vorrichtung bieten gegenüber dem aus WO 2004/029502 A1 bekannten System eine erhöhte Erkennungssicherheit, weil insbesondere der Nahbereich der Bildaufnahmeeinheiten in fehlersicherer Weise überwacht wird. Vorteilhafterweise basieren das neue Verfahren und die neue Vorrichtung dabei auf dem Verfahren und der Vorrichtung aus WO 2004/029502 A1, so dass auch bei dem neuen Verfahren und der neuen Vorrichtung zumindest zwei algorithmisch unterschiedliche Verfahren zur Szenenanalyse anhand der zumindest zwei Abbilder verwendet werden. Wenn zumindest eines dieser Verfahren eine Fremdobjektdetektion im oder vor dem Schutzbereich liefert, wird das Alarmsignal erzeugt.

Das neue Verfahren und die neue Vorrichtung besitzen auch eine wesentlich höhere Erkennungssicherheit als das Verfahren und die Vorrichtung aus DE 100 49 366 A1, weil eine lückenlose Überwachung des virtuellen Schutzbereichs gewährleistet ist. Demgegenüber besteht bei dem aus DE 100 49 366 A1 bekannten System die Möglichkeit, dass ein Fremdobjekt im verdeckten Sichtbereich der einen Bildaufnahmeeinheiten in den virtuellen Schutzbereich eindringen kann.

Die oben genannte Aufgabe ist daher vollständig gelöst.

In einer bevorzugten Ausgestaltung der Erfindung wird zumindest ein erster Entfernungswert bestimmt, der für die räumliche Lage von zumindest einem Fremdobjekt in den gemeinsamen Sichtbereich repräsentativ ist, und das Alarmsignal wird ferner in Abhängigkeit von dem ersten Entfernungswert erzeugt.

In dieser Ausgestaltung der Erfindung findet eine dreidimensionale Bildauswertung statt, um die exakte Lage und Position von Objekten im gemeinsamen Sichtbereich zu bestimmen. Eine solche dreidimensionale Bildinformation ermöglicht es, Schutzbereiche flexibler und situationsangepasster zu definieren und zu überwachen. Vorzugsweise findet eine konturbasierte und eine korrelationsbasierte Bildauswertung von zumindest Bildpaaren statt, wie dies in WO 2004/029502 A1 beschrieben ist.

In einer weiteren Ausgestaltung wird der erste Entfernungswert mit Hilfe eines Laufzeitmessverfahrens bestimmt.

Bei einem Laufzeitmessverfahren wird die Laufzeit eines Signals, insbesondere eines Lichtsignals, zu einem Fremdobjekt und zurück gemessen. Aus der bekannten Ausbreitungsgeschwindigkeit des Signals lässt sich die Entfernung zu dem Fremdobjekt bestimmen. Laufzeitmessverfahren sind eine sehr kostengünstige Möglichkeit, um Entfernungsinformationen zu gewinnen und eine dreidimensionale Bildauswertung zu ermöglichen.

In einer weiteren Ausgestaltung wird der erste Entfernungswert anhand eines stereoskopischen Vergleichs zwischen dem ersten und zweiten Abbild bestimmt.

Stereoskopische Verfahren zur Bestimmung von Entfernungsinformationen ähneln der Funktionsweise des menschlichen Auges, indem sie die Entfernung zu einem Objekt anhand der sog. Disparität bestimmen, die sich in den zumindest zwei Abbildern aufgrund der leicht unterschiedlichen Blickwinkel ergibt. Es versteht sich, dass diese Ausgestaltung auch trinokulare Verfahren und Vorrichtungen einschließt, d.h. diese Ausgestaltung ist nicht auf die Verwendung von genau zwei Bildaufnahmeeinheiten bzw. die Aufnahme von genau zwei Abbildern beschränkt. Die dreidimensionale Überwachung eines Raumbereichs mit Hilfe eines stereoskopischen Verfahrens eignet sich für die bevorzugte Anwendung besonderes gut, weil redundante Systeme in Bezug auf die Ein-Fehler-Sicherheit vorteilhaft sind. Ein stereoskopisches System kann die mehrfach vorhandenen Bildaufnahmeeinheiten optimal nutzen. Darüber hinaus ist die vorliegende Erfindung bei stereoskopischen Systemen besonders vorteilhaft, weil die Bestimmung des ersten Entfernungswertes korrelierende Bildbereiche in den ersten und zweiten Abbildern voraussetzt. Disjunkte Bildbereiche gefährden daher die Bestimmung des ersten Entfernungswertes. Andererseits lassen sich das neue Verfahren und die neue Vorrichtung in einem stereoskopisch arbeitenden System relativ einfach und mit großen Synergieeffekten integrieren. Wie bereits weiter oben erwähnt wurde, kommen als stereoskopische Verfahren in dieser Ausgestaltung vorteilhafterweise eine konturbasierte und eine korrelationsbasierte Bildauswertung redundant zum Einsatz.

In einer weiteren Ausgestaltung der Erfindung wird der virtuelle Schutzbereich anhand von zumindest einem zweiten Entfernungswert definiert, wobei das Alarmsignal erzeugt wird, wenn der zweite Entfernungswert größer als der erste Entfernungswert ist.

Diese Ausgestaltung ermöglicht eine sehr schnelle Auswertung in Bezug darauf, ob ein Fremdobjekt in den virtuellen Schutzbereich eingedrungen ist. Daher erleichtert diese Ausgestaltung eine Auswertung in Echtzeit, was für den bevorzugten Anwendungszweck von großem Vorteil ist. Darüber hinaus trägt diese Ausgestaltung weiter dazu bei, den virtuellen Schutzbereich lückenlos zu überwachen, weil ein Fremdobjekt, das zwar außerhalb des virtuellen Schutzbereichs steht, jedoch den Blick der Bildaufnahmeeinheiten auf den virtuellen Schutzbereich verdeckt, automatisch zur Erzeugung des Alarmsignals führt. Es versteht sich in diesem Fall, dass der Vergleich der ersten und zweiten Entfernungswerte in Bezug auf jeweils gleiche Bildbereiche (Pixel oder Pixelcluster) in jedem Abbild stattfindet, weil nur dann ein Vergleich der Entfernungswerte ein sinnvolles Ergebnis liefert.

In einer weiteren Ausgestaltung wird dem disjunkten Bildbereich ein dritter Entfernungswert zugeordnet, der kleiner als der zweite Entfernungswert ist.

Diese Ausgestaltung ermöglicht eine besonders einfache und effiziente Realisierung des neuen Verfahrens und der neuen Vorrichtung, da die Auswertung des disjunkten Bildbereichs nach demselben Prinzip erfolgt wie die Überwachung des virtuellen Schutzbereichs.

In einer weiteren Ausgestaltung werden das erste und das zweite Abbild mit einer höheren ersten Auflösung aufgenommen und der Vergleich zum Identifizieren von disjunkten Bildbereichen erfolgt anhand von modifizierten ersten und zweiten Abbildern, die eine geringere zweite Auflösung besitzen.

In dieser Ausgestaltung werden das erste und das zweite Abbild verkleinert, indem ihre Auflösung reduziert wird. Der betrachtete Bildausschnitt bleibt jedoch gleich. Diese Ausgestaltung ermöglicht eine besonders schnelle Implementierung der Auswertung, was eine Echtzeitauswertung weiter vereinfacht. Darüber hinaus besitzt diese Ausgestaltung den Vorteil, dass geringfügige disjunkte Bildbereiche unterdrückt werden, so dass das Alarmsignal nur dann erzeugt wird, wenn der disjunkte Bildbereich eine gewisse Mindestgröße überschreitet. Das Risiko von Fehlalarmen wird damit reduziert. Die Verkleinerung der Auflösung kann bspw. erfolgen, indem definierte, zusammenhängende Pixelbereiche mit mehreren Pixeln durch einen einzigen, gemittelten Pixelwert ersetzt werden.

In einer weiteren Ausgestaltung werden das erste und das zweite Abbild zumindest annähernd vollflächig verglichen, um disjunkte Bildbereiche zu identifizieren. Alternativ hierzu wäre es grundsätzlich denkbar, jeweils nur Ausschnitte aus dem ersten und zweiten Abbild auf disjunkte Bildbereiche zu untersuchen. Demgegenüber werden das erste und das zweite Abbild nach der vorliegenden Ausgestaltung in praktisch allen Teilbereichen auf disjunkte Bildbereiche durchsucht, selbst wenn dies nach der vorhergehenden Ausgestaltung bei einer reduzierten Auflösung erfolgt. Die Ausgestaltung bietet eine weiter erhöhte Erkennungssicherheit gegenüber einer auf lokale Teilbereiche begrenzten Suche nach disjunkten Bildbereichen. In bevorzugten Ausgestaltungen werden mehr als 80 % des (auflösungsreduzierten) Bildinhalts in jedem Abbild auf disjunkte Bildbereiche durchsucht, vorzugsweise sogar mehr als 90%.

In einer weiteren Ausgestaltung wird eine dritte Bildaufnahmeeinheit bereitgestellt, um ein drittes Abbild von dem Raumbereich aufzunehmen, wobei die erste, zweite und dritte Bildaufnahmeeinheit entlang von zwei nicht-parallelen Geraden angeordnet sind und weitgehend parallel zueinander liegende Sichtbereiche aufweisen.

In dieser Ausgestaltung spannen die zumindest drei Bildaufnahmeeinheiten eine Ebene auf, wobei jeweils zwei der zumindest drei Bildaufnahmeeinheiten eine stereoskopische Bildauswertung ermöglichen. Die Verwendung von zumindest drei Bildaufnahmeeinheiten ist von Vorteil, um Entfernungswerte zu beliebigen Objektkonturen innerhalb des überwachten Raumbereichs bestimmen zu können. Darüber hinaus besitzt ein solches System inhärent eine weitere Redundanz, was für die bevorzugte Anwendung zum Absichern von automatisiert arbeitenden Anlagen von Vorteil ist.

In besonders bevorzugten Ausgestaltungen erfolgt die Bildauswertung und insbesondere die Suche nach disjunkten Bildbereichen trinokular, d.h. es werden jeweils alle drei Abbilder miteinander verglichen. Die Erkennungssicherheit wird auf dieser Weise noch weiter verbessert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines bevorzugten Ausführungsbeispiels der neuen Vorrichtung zum Absichern einer automatisiert arbeitenden Anlage,
- Fig. 2: eine vereinfachte Darstellung eines Sensorsystems mit zumindest zwei Bildaufnahmeeinheiten für die Vorrichtung aus Fig. 1,
- Fig. 3: eine schematische Darstellung der Sichtbereiche der beiden Bildaufnahmeeinheiten aus Fig. 2,
- Fig. 4: die Draufsicht auf ein trinokulares Sensorsystem gemäß einem bevorzugten Ausführungsbeispiel der neuen Vorrichtung, und
- Fig. 5: ein Flussdiagramm zur Erläuterung eines bevorzugten Ausführungsbeispiels für das neue Verfahren.

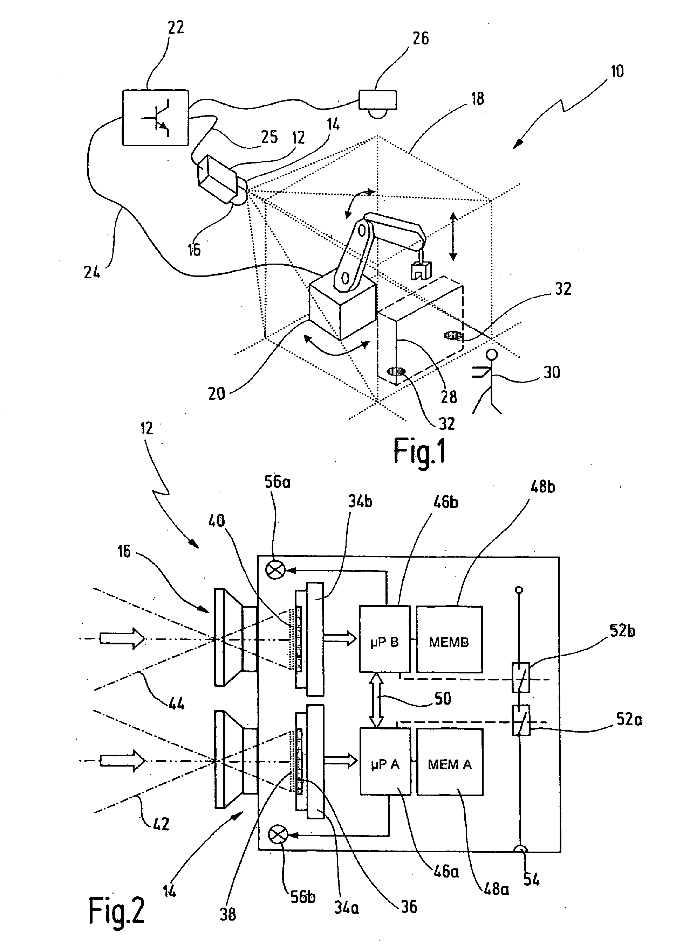

In Fig. 1 ist ein Ausführungsbeispiel der neuen Vorrichtung in seiner Gesamtheit mit der Bezugsziffer 10 bezeichnet.

Die Vorrichtung 10 beinhaltet eine Sensoreinheit 12, die hier mit zwei separaten Bildaufnahmeeinheiten 14, 16 dargestellt ist. In bevorzugten Ausführungsbeispielen sind die beiden Bildaufnahmeeinheiten 14, 16 in einem exakt definierten Abstand voneinander angeordnet und parallel zueinander ausgerichtet, so dass eine stereoskopische, dreidimensionale Bildaufnahme möglich wird. In anderen Ausführungsbeispielen können die Bildaufnahmeeinheiten 14, 16 lediglich redundant zueinander arbeiten, ohne dass eine stereoskopische Bildaufnahme stattfindet.

Die Sensoreinheit 12 dient dazu, einen Raumbereich 18 zu überwachen, in dem hier eine automatisiert arbeitende Anlage angeordnet ist, von der eine Gefahr ausgeht. In dem dargestellten Ausführungsbeispiel ist die automatisiert arbeitende Anlage ein Roboter 20, dessen Arbeitsbewegungen anhand von Pfeilen dargestellt sind. Aufgrund der Bewegungsgeschwindigkeiten und bewegten Massen stellen die Bewegungen des Roboters 20 eine Gefahr für Personen oder Gegenstände in dem Raumbereich 18 dar. Die neue Vorrichtung und das neue Verfahren sind jedoch nicht auf das Absichern von Robotern beschränkt. Es können auch Gefahrbereiche von anderen Anlagen, wie etwa Transportbändern oder Montagezellen, abgesichert werden. Außerdem können die neue Vorrichtung und das neue Verfahren auch zur Diebstahlsicherung etc. eingesetzt werden.

Mit der Bezugsziffer 22 ist eine Steuereinheit bezeichnet, die über eine Leitung 24 mit dem Roboter 20 verbunden ist. Die Steuereinheit 22 erhält von der Sensoreinheit 12 über eine Leitung 25 ein Alarmsignal bzw. Abschaltsignal, wenn aufgrund der (bevorzugt dreidimensionalen) Bildaufnahme eine Gefahrensituation erkannt wird. In Abhängigkeit von diesem Alarm- bzw. Abschaltsignal setzt die Steuereinheit 22 den Roboter 20 still. Darüber hinaus kann die Steuereinheit 22 auch die Arbeitsbewegungen des Roboters 20 steuern, wie dies den einschlägigen Fachleuten per se bekannt ist. Alternativ hierzu können die Arbeitsbewegungen des Roboters 20 von einer separaten sog. Standardsteuerung gesteuert werden (hier nicht dargestellt). Die Steuereinheit 22 ist in den bevorzugten Ausführungsbeispielen eine fehlersichere Steuereinheit, wie sie bspw. von der Anmelderin der vorliegenden Erfindung unter der Bezeichnung PSS® angeboten wird.

Mit der Bezugsziffer 26 ist eine optionale Lichtquelle bezeichnet, die dazu dient, den Raumbereich 18 zu beleuchten.

Innerhalb des Raumbereichs 18 ist ein virtueller Schutzbereich 28 dargestellt, der eine unsichtbare Barriere bildet, um den Arbeitsbereich des Roboters 20 abzusperren. Wenn eine Person 30 oder ein anderes Fremdobjekt in den Schutzbereich 28 eintritt, wird dies mit Hilfe der Sensoreinheit 12 erkannt und die Sensoreinheit 12 erzeugt dann das Alarm- bzw. Abschaltsignal 25.

Der Schutzbereich 28 ist hier als virtueller Schutzbereich bezeichnet, da er kein reales Hindernis, wie etwa ein Gitterzaun oder eine andere mechanische Absperrung, darstellt. Stattdessen wird der Schutzbereich 28 mit Hilfe der Sensoreinheit 12 virtuell erzeugt, indem die Sensoreinheit 12 das Eindringen der Person 30 in denjenigen Teil des Raumbereichs 18, der dem Schutzbereich 28 entspricht, detektiert.

Bei den Bezugsziffern 32 sind zwei Referenzmarken dargestellt, die auf dem Boden des Raumbereichs 18 angeordnet sind. Die Referenzmarken besitzen ein definiertes Muster. Die Sensoreinheit 12 ist dazu ausgebildet, mit Hilfe der Referenzmarken 32 Funktionstests durchzuführen, anhand derer bspw. überprüft wird, dass die Sensoreinheit 12 den "richtigen" Raumbereich 18 überwacht. Des Weiteren beinhalten die Funktionstests in bevorzugten Ausführungsbeispielen eine Überprüfung auf unzulässig starke Verschmutzungen, Nebelbildungen u.a., die eine sichere Überwachung des Raumbereichs 18 gefährden könnten.

Fig. 2 zeigt die Sensoreinheit 12 in weiteren Details. Gleiche Bezugszeichen bezeichnen dieselben Elemente wie zuvor.

Jede Bildaufnahmeeinheit 14, 16, beinhaltet einen Bildsensor 34 mit einer Vielzahl von Pixeln 36. Der Bildsensor 34a der ersten Bildaufnahmeeinheit 14 dient dazu, ein erstes Abbild 38 des Raumbereichs 18 aufzunehmen. Der Bildsensor 34b der zweiten Bildaufnahmeeinheit 16 nimmt ein zweites Abbild 40 des Raumbereichs 18 auf. Das erste und das zweite Abbild 38, 40 ergeben sich aus dem jeweiligen Sichtbereich 42, 44 der beiden Bildaufnahmeeinheiten 14, 16, die in Fig. 2 schematisch angedeutet sind. In bevorzugten Ausführungsbeispielen sind die Sichtbereiche 42, 44 parallel zueinander angeordnet, d.h. die optischen Achsen der Abbildungsoptiken der Bildaufnahmeeinheiten 14, 16 verlaufen parallel. Grundsätzlich könnten die beiden Bildaufnahmeeinheiten 14, 16 jedoch auch nicht-parallel zueinander angeordnet sein, indem bspw. eine elektronische Bildanpassung bei der nachfolgenden Bildverarbeitung durchgeführt wird.

Im vorliegenden Ausführungsbeispiel besitzt jede Bildaufnahmeeinheit 14, 16 eine Auswerteeinheit, die hier anhand von zwei Prozessoren 46a, 46b mit zugeordneten Speichern 48a, 48b dargestellt sind. In anderen bevorzugten Ausführungsbeispielen ist die Auswerteeinheit getrennt von den beiden Bildaufnahmeeinheit 14, 16 angeordnet, was den Vorteil besitzt, dass das "Auge" des Systems kleiner und leichter realisiert und dementsprechend einfacher über dem Raumbereich 18 montiert werden kann. Die Auswerteeinheit kann in diesem Fall einfacher gekühlt werden und es steht mehr Bauraum zur Verfügung.

In den Speichern 48a, 48b sind einerseits Programme mit Programmcode gespeichert, mit dessen Hilfe die (bevorzugt stereoskopische) Bildauswertung durchgeführt wird. Darüber hinaus ist in zumindest einem der Speicher 48a, 48b ein Datensatz (hier nicht dargestellt) gespeichert, der für die Lage und Ausdehnung des virtuellen Schutzbereichs 28 repräsentativ ist. Es können auch Datensätze für mehrere separate oder zusammenhängende Schutzbereiche abgespeichert sein. In bevorzugten Ausführungsbeispielen beinhalten diese Datensätze zweite Entfernungswerte, die Entfernungen zwischen der Sensoreinheit 12 und den Begrenzungsflächen des jeweiligen virtuellen Schutzbereichs 28 repräsentieren. Die Prozessoren 46a, 46b bestimmen zunächst erste Entfernungswerte zu Objekten im Raumbereich 18, und sie überprüfen anschließend anhand der ersten Entfernungswerte und anhand der zweiten Entfernungswerte, ob sich ein Fremdobjekt 30 innerhalb eines überwachten Schutzbereichs 28 befindet.

Mit einem Doppelpfeil 50 ist in Fig. 2 dargestellt, dass die Prozessoren 46a, 46b Bilddaten und/oder Auswerteergebnisse austauschen können, um die stereoskopische Bildauswertung und/oder eine redundante Signalverarbeitung zu ermöglichen. In bevorzugten Ausführungsbeispielen erfolgt die Auswertung der ersten und zweiten Abbilder mit Hilfe von zwei unterschiedlichen dreidimensionalen Szeneanalyseverfahren, wie dies in WO 2004/029502 A1 beschrieben ist. In anderen Ausführungsbeispielen bestimmen die Prozessoren 46a, 46b die ersten Entfernungen anhand einer Laufzeitmessung. In diesen Ausführungsbeispielen besitzt die Sensoreinheit 12 vorteilhafterweise eine oder mehrer Lichtquellen 56, die ein zur Laufzeitmessung geeignetes Lichtsignal aussenden. Bei einer stereoskopischen Bildauswertung können die Lichtquellen 56 entfallen.

Die Sensoreinheit 12 ist hier mit zwei redundant in Reihe zueinander liegenden Schaltelementen 52a, 52b dargestellt. Die Schaltelemente 52a, 52b werden von den Prozessoren 46a, 46b angesteuert, um an einem Ausgang 54 ein Alarm- bzw. Abschaltsignal zu erzeugen, das über die Leitung 25 der übergeordneten Steuereinheit 22 zuführbar ist. Wenngleich die Schaltelemente hier als elektromechanische Schaltelemente 52a, 52b dargestellt sind, kann es sich auch um elektronische Schaltelemente, bspw. um MOS-Transistoren, handeln.

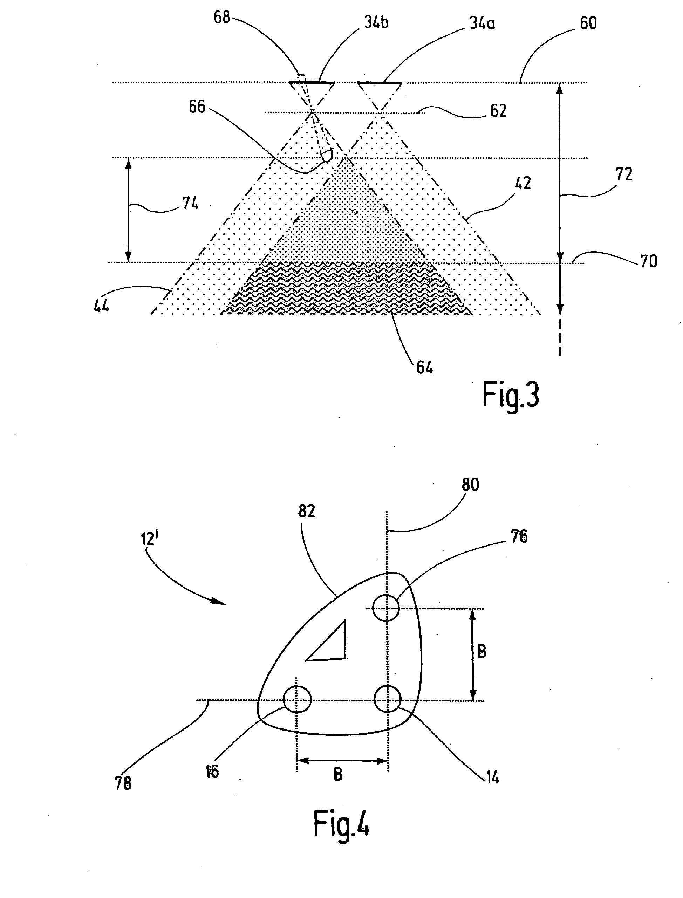

Nachfolgend wird anhand von Fig. 3 das Funktionsprinzip der Vorrichtung 10 in einem bevorzugten Ausführungsbeispiel erläutert. Gleiche Bezugszeichen bezeichnen weiterhin dieselben Elemente wie zuvor.

Fig. 3 zeigt die beiden Bildsensoren 34a, 34b, die eine Sensorebene 60 definieren. Mit der Bezugsziffer 62 ist eine Ebene bezeichnet, die durch die Eintrittspupillen der Abbildungsoptiken der beiden Bildaufnahmeeinheiten 14, 16 definiert ist. Wie in Fig. 3 dargestellt ist, öffnen sich die Sichtbereiche 42, 44 der beiden Bildaufnahmeeinheiten 14, 16 kegelförmig in Richtung des Raumbereichs 18, wobei die jeweilige Kegelspitze in der Ebene 62 der Eintrittspupillen liegt. Die Sichtbereiche 42, 44 überlappen sich und bilden einen gemeinsamen, überlappenden Sichtbereich 64. Objekte, die innerhalb des überlappenden Sichtbereichs 64 angeordnet sind, werden auf beide Bildsensoren 34a, 34b abgebildet. Im Gegensatz dazu wird ein Objekt 66, das außerhalb des gemeinsamen Sichtbereichs 64 angeordnet ist, lediglich auf denjenigen Bildsensor abgebildet (hier Bildsensor 34b), in dessen Sichtbereich 44 sich das Objekt befindet. Das Abbild des Objekts 66 ist in Fig. 3 mit der Bezugsziffer 68 bezeichnet und hier lediglich zur besseren Darstellung oberhalb der Sensorebene 60 gezeigt.

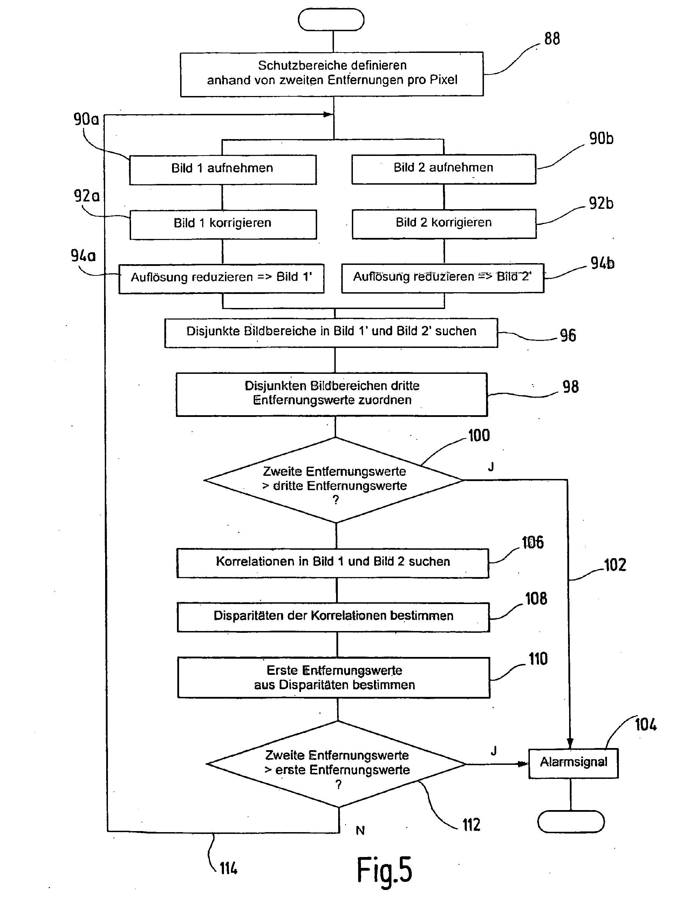

Da das Objekt 66 hier außerhalb des Sichtbereichs 42 des Bildsensors 34a liegt, ist das Abbild 68 bzw. ein dementsprechender Bildbereich in dem Abbild 38 nicht enthalten. Das Abbild 68 enthält somit einen disjunkten Bildbereich, der bei einem Vergleich der Abbilder 38, 40 keine Korrelation hervorruft. Dies hat zur Folge, dass in dem Pixelbereich, der von dem Abbild 68 auf dem Bildsensor 34b bedeckt wird, keine stereoskopische Bildauswertung möglich ist. Die Sensoreinheit 12 ist daher nicht in der Lage, in demjenigen Pixelbereich, der von dem Abbild 68 überdeckt wird, Entfernungswerte zu bestimmen. In Folge dessen kann die Sensoreinheit 12 auch einen Teil des Schutzbereichs 28, der von dem Objekt 66 verdeckt wird, nicht überwachen. Wie nachfolgend anhand der Fig. 5 noch näher erläutert wird, wird dem disjunkten Bildbereich 68 ein dritter Entfernungswert zugeordnet, der so gewählt ist, dass die Sensoreinheit 12 das Alarm- bzw. Abschaltsignal 25 erzeugt, wenn der disjunkte Bildbereich 68 einen Teil des Schutzbereichs 28 verdeckt.

In bevorzugten Ausführungsbeispielen der Erfindung wird nicht der gesamte überlappende Sichtbereich 64 als Überwachungsbereich verwendet. Vielmehr erfolgt eine "echte" situationsabhängige Überwachung erst ab einer definierten Mindestentfernung, die in Fig. 3 bei der Linie 70 beginnt. Der Bereich zwischen der Linie 70 und der Sensorebene 60 wird als Nahbereich 72 bezeichnet. Innerhalb des Nahbereichs 72 erfolgt eine Bildauswertung und Überwachung, wie zuvor anhand des Objekts 66 erläutert wurde. Mit anderen Worten wird einem Objekt, das sich zwar innerhalb des überlappenden Sichtbereichs 64, jedoch in dessen "spitzen" Teil 74 befindet, ein dritter Entfernungswert zugeordnet, der so bemessen ist, dass er zur Erzeugung des Abschalt- bzw. Alarmsignals 25 führt, wenn eine Überdeckung des virtuellen Schutzbereichs 28 vorliegt.

Fig. 4 zeigt ein bevorzugtes Ausführungsbeispiel der Sensoreinheit 12 (hier mit 12' bezeichnet) in einer Draufsicht von vorne. Die Sensoreinheit 12' besitzt drei Bildaufnahmeeinheiten 14, 16, 76, die in etwa L-förmig zueinander angeordnet sind. Die Bildaufnahmeeinheiten 14, 16 sind entlang einer ersten Geraden 78 angeordnet. Die Bildaufnahmeeinheiten 14, 76 sind entlang einer zweiten Geraden 80 angeordnet. In den bevorzugten Ausführungsbeispielen verlaufen die beiden Geraden 78, 80 orthogonal zueinander und die jeweiligen Paare 14, 16 bzw. 14, 76 sind jeweils mit einer definierten Basisweite B voneinander beabstandet. In dem bevorzugten Ausführungsbeispiel sind die Bildaufnahmeeinheiten 14, 16, 76 an einer vorzugsweise einstückigen, verwindungssteifen Grundplatte 82 angeordnet, die die drei Bildaufnahmeeinheiten 14, 16, 76 in den angegebenen Positionen dauerhaft fixiert. Ein bevorzugter mechanischer Aufbau der Sensoreinheit 12' ist in der nicht-vorveröffentlichten deutschen Patentanmeldung mit den Aktenzeichen 10 2006 050 235.3 beschrieben.

Fig. 5 zeigt ein Flussdiagramm zur Erläuterung eines bevorzugten Ausführungsbeispiels des neuen Verfahrens. Gemäß Schritt 88 werden zunächst der oder die virtuellen Schutzbereiche 28 definiert. In bevorzugten Ausführungsbeispielen des Verfahrens erfolgt dies mit Hilfe eines graphischen Konfigurationswerkzeugs, wie es in der deutschen Patentanmeldung 10 2005 063 217.3 beschrieben ist. Nach diesem Verfahren kann der Bediener virtuelle Schutzbereiche 28 innerhalb eines Echtbildes von dem Raumbereich 18, das mit Hilfe der Sensoreinheit 12 aufgenommen wird, graphisch einzeichnen. Das Konfigurationstool bestimmt dann zu den Pixeln, auf die der virtuelle Schutzbereich 28 "abgebildet" wird, virtuelle Entfernungswerte (zweite Entfernungswerte).

Im Überwachungsbetrieb werden gemäß den Schritten 90a, 90b zeitgleich ein erstes und ein zweites Abbild mit Hilfe der zumindest zwei Bildaufnahmeeinheiten 14, 16 aufgenommen. Gemäß den Schritten 92a, 92b werden das erste und zweite Abbild korrigiert. Diese Korrektur kann eine Korrektur des Fixed Pattern Noise, eine Rektifizierung und andere Korrekturmaßnahmen beinhalten. Gemäß den Schritten 94a, 94b werden außerdem modifizierte erste und zweite Abbilder erzeugt, bei denen die Auflösung jeweils reduziert ist.

Gemäß Schritt 96 werden dann disjunkte Bildbereiche in den modifizierten Abbildern gesucht, indem die modifizierten Abbilder miteinander verglichen werden. Etwaig gefundenen disjunkten Bildbereichen werden gemäß Schritt 98 dritte Entfernungswerte zugeordnet, die per definitionem kleiner sind als die zweiten Entfernungswerte, die die Lage der Schutzbereiche 28 definieren.

Anschließend erfolgt gemäß Schritt 100 eine Überprüfung, ob in einzelnen Pixeln oder Pixelbereichen der modifizierten ersten und zweiten Abbilder die Bedingung "zweite Entfernungswerte größer dritte Entfernungswerte" erfüllt ist. Wenn dies der Fall ist, wird gemäß dem Abzweig 102 ein Alarmsignal 104 erzeugt, weil dann ein disjunkter Bildbereich einen Teilbereich des virtuellen Schutzbereichs 28 überdeckt. Das Alarmsignal gemäß Schritt 104 kann zum Abschalten der überwachten Anlage führen, wie dies weiter oben anhand Fig. 1 erläutert wurde. Alternativ hierzu kann auch lediglich eine Warnmeldung ausgegeben werden oder eine andere Sicherheitsfunktion ausgelöst werden.

Führt die Überprüfung im Schritt 100 für alle Pixel oder Pixelbereiche zu dem Ergebnis, dass kein Schutzbereich 28 von einem disjunkten Bildbereich überdeckt ist, werden gemäß Schritt 106 Korrelationen in den ersten und zweiten Abbildungen gesucht. Gemäß Schritt 108 werden sog. Disparitäten zu den gefundenen Korrelationen bestimmt. Anhand der Disparitäten werden gemäß Schritt 110 erste Entfernungswerte bestimmt, die für die Entfernung eines Objekts im Raumbereich 18 relativ zu der Sensoreinheit 12 repräsentativ sind. Gemäß Schritt 112 werden anschließend die ersten und zweiten Entfernungswerte miteinander verglichen. Führt der Vergleich zu dem Ergebnis, dass zweite Entfernungswerte, welche die Lage eines Schutzbereichs 28 repräsentieren, größer sind als erste Entfernungswerte im selben Pixelbereich, wird eine Verletzung des Schutzbereichs 28 angenommen. Gemäß Schritt 104 wird dann das Alarmsignal ausgelöst. Führt die Abfrage 112 zu dem Ergebnis, dass kein Schutzbereich 28 verletzt ist, verzweigt das Verfahren gemäß Schritt 114 zu den Schritten 90a, 90b, in denen die nächsten Abbilder aufgenommen werden.

Die Bestimmung der ersten Entfernungswerte anhand von Disparitäten ist in der schon erwähnten WO 2004/029502 A1 sowie in den dort erwähnten Veröffentlichungen beschrieben. Zur Vermeidung von Wiederholungen wird auf diese Veröffentlichungen ausdrücklich Bezug genommen.

## Patentansprüche

1. Verfahren zum Überwachen eines dreidimensionalen Raumbereichs (18), insbesondere zum Absichern einer automatisiert arbeitenden Anlage (20), mit den Schritten:
- Bereitstellen von zumindest einer ersten und einer zweiten Bildaufnahmeeinheit (14, 16), die mit einem gemeinsamen Sichtbereich (64) auf den Raumbereich (18) ausgerichtet sind,
- Definieren von zumindest einem virtuellen Schutzbereich (28) innerhalb des gemeinsamen Sichtbereichs (64), wobei der virtuelle Schutzbereich (28) mit Hilfe der Bildaufnahmeeinheiten (14, 16) überwacht wird, so dass das Eindringen eines Fremdobjekts (30) in den virtuellen Schutzbereich (28) ein Alarmsignal (104) auslöst,
- Aufnehmen eines ersten Abbildes (38) von dem Raumbereich (18) mit Hilfe der ersten Bildaufnahmeeinheit (14) und Aufnehmen eines zweiten Abbildes (40) von dem Raumbereich (18) mit Hilfe der zweiten Bildaufnahmeeinheit (16),
- Vergleichen des ersten und zweiten Abbildes (38, 40), um zueinander disjunkte Bildbereiche (68) in dem ersten und zweiten Abbild (38, 40) zu identifizieren, wobei ein disjunkter Bildbereich (68) in einem der zwei Abbilder (38, 40) ein Objekt (66) zeigt, das im jeweils anderen Abbild nicht vorhanden oder zumindest nicht erkennbar ist, und
- Erzeugen des Alarmsignals (104) in Abhängigkeit von den disjunkten Bildbereichen (68) und dem virtuellen Schutzbereich (28),
**dadurch gekennzeichnet, dass** das Alarmsignal (104) erzeugt wird, wenn das Objekt (66) im disjunkten Bildbereich (68) den virtuellen Schutzbereich (28) verdeckt.

2. Verfahren nach Anspruch 1, **dadurch gekennzeichnet, dass** zumindest ein erster Entfernungswert (110) bestimmt wird, der für die räumliche Lage von zumindest einem Fremdobjekt (30) in dem gemeinsamen Sichtbereich (64) repräsentativ ist, und dass das Alarmsignal (104) ferner in Abhängigkeit von dem ersten Entfernungswert erzeugt wird.

3. Verfahren nach Anspruch 2, **dadurch gekennzeichnet, dass** der erste Entfernungswert mit Hilfe eines Laufzeitmessverfahrens bestimmt wird.

4. Verfahren nach Anspruch 2 oder 3, **dadurch gekennzeichnet, dass** der erste Entfernungswert anhand eines stereoskopischen Vergleichs zwischen dem ersten und zweiten Abbild (38, 40) bestimmt wird.

5. Verfahren nach einem der Ansprüche 2 bis 4, **dadurch gekennzeichnet, dass** der virtuelle Schutzbereich (28) anhand von zumindest einem zweiten Entfernungswert (88) definiert wird, wobei das Alarmsignal (104) erzeugt wird, wenn der zweite Entfernungswert größer als der erste Entfernungswert ist (112).

6. Verfahren nach Anspruch 5, **dadurch gekennzeichnet, dass** dem disjunkten Bildbereich (68) ein dritter Entfernungswert (98) zugeordnet wird, der kleiner als der zweite Entfernungswert ist.

7. Verfahren nach einem der Ansprüche 2 bis 6, **dadurch gekennzeichnet, dass** der Vergleich (100) zum Identifizieren von disjunkten Bildbereichen (68) durchgeführt wird, bevor der erste Entfernungswert (110) bestimmt wird.

8. Verfahren nach einem der Ansprüche 1 bis 7, **dadurch gekennzeichnet, dass** das erste und das zweite Abbild (38, 40) mit einer höheren ersten Auflösung aufgenommen werden, und dass der Vergleich (100) zum Identifizieren von disjunkten Bildbereichen (68) anhand von modifizierten ersten und zweiten Abbildern (96) erfolgt, die eine geringere zweite Auflösung aufweisen.

9. Verfahren nach einem der Ansprüche 1 bis 8, **dadurch gekennzeichnet, dass** das erste und das zweite Abbild (38, 40) zumindest annähernd vollflächig verglichen werden, um disjunkte Bildbereiche zu identifizieren.

10. Verfahren nach einem der Ansprüche 1 bis 9, **dadurch gekennzeichnet, dass** eine dritte Bildaufnahmeeinheit (76) bereitgestellt wird, um ein drittes Abbild von dem Raumbereich (18) aufzunehmen, wobei die erste, zweite und dritte Bildaufnahmeeinheit (14, 16, 76) entlang von zwei nicht-parallelen Geraden (78, 80) angeordnet sind und weitgehend parallel zueinander liegende Sichtbereiche (42, 44) aufweisen.

11. Vorrichtung zum Überwachen eines dreidimensionalen Raumbereichs (18), insbesondere zum Absichern einer automatisiert arbeitenden Anlage (20), mit zumindest einer ersten und einer zweiten Bildaufnahmeeinheit (14, 16), die mit einem gemeinsamen Sichtbereich (64) auf den Raumbereich (18) ausgerichtet sind, wobei die erste Bildaufnahmeeinheit (14) dazu ausgebildet ist, ein erstes Abbild (38) von dem Raumbereich (18) aufzunehmen, und wobei die zweite Bildaufnahmeeinheit (16) dazu ausgebildet ist, ein zweites Abbild (40) von dem Raumbereich (18) aufzunehmen, und mit einer Auswerteeinheit (46) mit einem Speicherbereich (48) zum Abspeichern eines Datensatzes, der zumindest einen virtuellen Schutzbereich (28) innerhalb des gemeinsamen Sichtbereichs (64) definiert, wobei die Auswerteeinheit (46) dazu ausgebildet ist, ein Alarmsignal in Abhängigkeit von zumindest einem der Abbilder (38, 40) auszulösen, wenn ein Fremdobjekt (30) in den virtuellen Schutzbereich (28) eindringt, wobei die Auswerteeinheit (46) ferner dazu ausgebildet ist, das erste und zweite Abbild (38, 40) zu vergleichen, um zueinander disjunkte Bildbereiche (68) in dem ersten und zweiten Abbild (38, 40) zu identifizieren, und wobei ein disjunkter Bildbereich (68) in einem der zwei Abbilder (38, 40) ein Objekt (66) zeigt, das im jeweils anderen Abbild nicht vorhanden oder zumindest nicht erkennbar ist, **dadurch gekennzeichnet, dass** die Auswerteeinheit (46) außerdem dazu ausgebildet ist, das Alarmsignal zu erzeugen, wenn das Objekt (66) im disjunkten Bildbereich (68) den virtuellen Schutzbereich (28) verdeckt.

## Claims

1. A method for monitoring a three-dimensional spatial area (18), in particular for safeguarding an automatically operating installation (20), comprising the steps of:
- providing at least a first and a second image recording unit (14, 16) directed to the spatial area (18) with a common viewing area (64),
- defining at least one virtual protection zone (28) within the common viewing area (64), said virtual protection zone (28) being monitored by means of the image recording units (14, 16) such that an intrusion of a foreign object (30) into the virtual protection zone (28) triggers an alarm signal (104),
- recording a first image (38) of the spatial area (18) by means of the first image recording unit (14) and recording a second image (40) of the spatial area (18) by means of the second image recording unit (16),
- comparing the first and second images (38, 40) in order to identify mutually disjoint image regions (68) in the first and second images (38, 40), wherein a disjoint image region (68) shows an object (66) in one of the two images (38, 40), which object is not present in the respective other image or at least cannot be detected, and
- generating the alarm signal (104) as a function of the disjoint image regions (68) and the virtual protection zone (28),
**characterized in that** the alarm signal (104) is generated when the object (66) in the disjoint image region (68) covers the virtual protection zone (28).

2. The method of claim 1, **characterized in that** at least a first distance value (110) is determined, which distance value is representative of the spatial position of at least one foreign object (30) in the common viewing area (64), and the alarm signal (104) is further generated as a function of the first distance value.

3. The method of claim 2, **characterized in that** the first distance value is determined by means of a propagation time measuring method.

4. The method of claim 2 or 3, **characterized in that** the first distance value is determined by means of a stereoscopic comparison between the first and second images (38, 40).

5. The method of one of claims 2 to 4, **characterized in that** the virtual protection zone (28) is defined by means of at least a second distance value (88), the alarm signal (104) being generated when the second distance value is greater than the first distance value (112).

6. The method of claim 5, **characterized in that** the disjoint image region (68) is assigned a third distance value (98) which is smaller than the second distance value.

7. The method of one of claims 2 to 6, **characterized in that** the comparison (100) for identifying disjoint image regions (68) is carried out before the first distance value (110) is determined.

8. The method of one of claims 1 to 7, **characterized in that** the first and the second images (38, 40) are recorded with a higher first resolution, and the comparison (100) for identifying disjoint image regions (68) is performed by means of modified first and second images (96) that have a lower second resolution.

9. The method of one of claims 1 to 8, **characterized in that** the first and the second images (38, 40) are compared at least approximately over the entire image area in order to identify disjoint image regions.

10. The method of one of claims 1 to 9, **characterized in that** a third image recording unit (76) is provided in order to record a third image of the spatial area (18), the first, second and third image recording units (14, 16, 76) being arranged along two nonparallel straight lines (78, 80), and comprising viewing areas (42, 44) that are substantially parallel to one another.

11. An apparatus for monitoring a three-dimensional spatial area (18), in particular for protecting an automatically operating installation (20), comprising at least a first and a second image recording unit (14, 16) directed to the spatial area (18) with a common viewing area (64), the first image recording unit (14) being designed to record a first image (38) of the spatial area (18) and the second image recording unit (16) being designed to record a second image (40) of the spatial area (18), and comprising an evaluation unit (46) with a memory (48) for storing a data record that defines at least one virtual protection zone (28) within the common viewing area (64), the evaluation unit (46) being designed to trigger an alarm signal as a function of at least one of the images (38, 40) when a foreign object (30) intrudes into the virtual protection zone (28), and the evaluation unit (46) being further designed to compare the first and second images (38, 40) in order to identify mutually disjoint image regions (68) in the first and second images (38, 40), wherein a disjoint image region (68) shows an object (66) in one of the two images (38, 40), which object is not present in the respective other image or at least cannot be detected, **characterized in that** the evaluation unit (46) is further designed to generate the alarm signal when the object in the disjoint image region (68) covers the virtual protection zone (28).

## Revendications

1. Procédé de surveillance d'une région spatiale à trois dimensions (18), notamment destiné à sécuriser une installation fonctionnant de manière automatisée (20), comprenant les étapes consistant à :
- prévoir au moins des première et deuxième unités d'acquisition d'images (14, 16) qui sont orientées de manière à avoir une région de vision commune (64) vers la région spatiale (18),
- définir au moins une région de protection virtuelle (28) à l'intérieur de la région de vision commune (64), dans lequel la zone de protection virtuelle (28) est surveillée à l'aide des unités d'acquisition d'images (14, 16) de manière à ce que l'introduction d'un objet étranger (30) dans la zone de protection virtuelle (28) déclenche un signal d'alarme (104),
- acquérir une première image (38) de la région spatiale (18) à l'aide de la première unité d'acquisition d'images (14) et acquérir une deuxième image (40) de la région spatiale (18) à l'aide de la deuxième unité d'acquisition d'images (16),
- comparer les première et deuxième images (38, 40) afin d'identifier des régions d'images disjointes les unes des autres (68) dans les première et deuxième images (38, 40), dans lequel une région d'image disjointe (68) dans l'une des deux images (38, 40) indique un objet (66) qui n'est pas présent ou du moins qui n'est pas détectable dans l'autre image respective, et
- générer le signal d'alarme (104) en fonction des régions d'images (68) disjointes et de la région de protection virtuelle (28),
**caractérisé en ce que** le signal d'alarme (104) est généré lorsque l'objet (66) masque la région de protection virtuelle (28) dans la région d'image disjointe (68).

2. Procédé selon la revendication 1, **caractérisé en ce qu'**on détermine au moins une première valeur de distance (110) qui est représentative de la position spatiale d'au moins un objet étranger (30) dans la région de vision commune (64) et **en ce que** le signal d'alarme (104) est en outre généré en fonction de la première valeur de distance.

3. Procédé selon la revendication 2, **caractérisé en ce que** la première valeur de distance est déterminée à l'aide d'un procédé de mesure de temps de parcours.

4. Procédé selon la revendication 2 ou 3, **caractérisé en ce que** la première valeur de distance est déterminée sur la base d'une comparaison stéréoscopique entre les première et deuxième images (38, 40).

5. Procédé selon l'une quelconque des revendications 2 à 4, **caractérisé en ce que** la région de protection virtuelle (28) est définie sur la base d'au moins une deuxième valeur de distance (88), dans lequel le signal d'alarme (104) est généré lorsque la deuxième valeur de distance est supérieure à la première valeur de distance (112).

6. Procédé selon la revendication 5, **caractérisé en ce qu'**une troisième valeur de distance (98) qui est inférieure à la deuxième valeur de distance est associée à la région d'image disjointe (68).

7. Procédé selon l'une quelconque des revendications 2 à 6, **caractérisé en ce que** la comparaison (100) est effectuée pour identifier des régions d'images disjointes (68) avant de déterminer la première valeur de distance (110).

8. Procédé selon l'une quelconque des revendications 1 à 7, **caractérisé en ce que** les première et deuxième images (38, 40) sont acquises avec une première résolution plus élevée et **en ce que** la comparaison (100) destinée à identifier des régions d'images disjointes (68) est effectuée sur la base de première et deuxième images (96) modifiées qui présentent une deuxième résolution plus faible.

9. Procédé selon l'une quelconque des revendications 1 à 8, **caractérisé en ce que** les première et deuxième images (38, 40) sont comparées au moins approximativement sur la totalité de la surface afin d'identifier des régions d'images disjointes.

10. Procédé selon l'une quelconque des revendications 1 à 9, **caractérisé en ce qu'**il est prévu une troisième unité d'acquisition d'images (76) afin d'acquérir une troisième image de la région spatiale (18), dans lequel les première, deuxième et troisième unités d'acquisition d'images (14, 16, 76) sont disposées le long de deux droites non parallèles (78, 80) et présentent des régions de vision (42, 44) sensiblement parallèles l'une à l'autre.

11. Dispositif de surveillance d'une région spatiale à trois dimensions (18), notamment destiné à sécuriser une installation fonctionnant de manière automatisée (20), comportant au moins des première et deuxième unités d'acquisition d'images (14, 16) qui sont orientées de manière à avoir une région de vision commune (64) vers la région spatiale (18), dans lequel la première unité d'acquisition d'images (14) est conçue pour acquérir une première image (38) de la région spatiale (18) et dans lequel la deuxième unité d'acquisition d'images (16) est conçue pour acquérir une deuxième image (40) de la région spatiale (18), et comportant une unité d'évaluation (46) ayant une région de mémoire (48) destinée à stocker un ensemble de données qui définit au moins une région de protection virtuelle (28) à l'intérieur de la région de vision commune (64), dans lequel l'unité d'évaluation (46) est conçue pour déclencher un signal d'alarme en fonction d'au moins l'une des images (38, 40) lorsqu'un objet étranger (30) pénètre dans la région de protection virtuelle (28), dans lequel l'unité d'évaluation (46) est en outre conçue pour comparer les première et deuxième images (38, 40) afin d'identifier des régions d'images disjointes les unes des autres (68) dans les première et deuxième images (38, 40), et dans lequel une région d'image disjointe (68) dans l'une des deux images (38, 40) indique un objet (66) qui n'est pas présent ou du moins qui n'est pas détectable dans l'autre image respective, **caractérisé en ce que** l'unité d'évaluation (46) est en outre conçue pour générer le signal d'alarme lorsque l'objet (66) masque la région de protection virtuelle (28) dans la région d'image disjointe (68).
